# EUROPÄISCHE PATENTSCHRIFT

(11) **EP 3 347 858 B1**
(45) Veröffentlichungstag und Bekanntmachung des Hinweises auf die Patenterteilung: **04.09.2024**
(21) Anmeldenummer: 16788646.4
(22) Anmeldetag: 17.10.2016
(51) Int. Cl.: G06T 7/00, G06V 20/58

(54) **VORRICHTUNG UND VERFAHREN ZUM VERARBEITEN EINER WENIGSTENS EINE INFORMATION DARSTELLENDEN BILDDARSTELLUNG**
DEVICE AND METHOD FOR PROCESSING AN IMAGE REPRESENTATION REPRESENTING AT LEAST ONE INFORMATION
DISPOSITIF ET PROCÉDÉ DE TRAITEMENT D'UNE IMAGERIE REPRÉSENTANT AU MOINS UNE INFORMATION

(30) Priorität: 06.11.2015 DE 102015221823
(43) Veröffentlichungstag der Anmeldung: 18.07.2018
(73) Patentinhaber: Siemens Mobility GmbH, 81739 München (DE)
(72) Erfinder: BECKER, Stephan, 38820 Halberstadt (DE); BEUTEL, Wilhelm, 85521 Riemerling (DE); BUNTROCK, Thomas, 38126 Braunschweig (DE); EULER, Helmuth, 85625 Glonn (DE); VORWERK, Peter, 38100 Braunschweig (DE)
(74) Vertreter: Siemens Patent Attorneys
(86) Internationale Anmeldenummer: PCT/EP2016/074826
(87) Internationale Veröffentlichungsnummer: WO 2017/076613

(56) Entgegenhaltungen:
- EP-A2- 1 395 059
- WO-A1-2012/016374
- WO-A2-2007/033902
- JP-A- 2004 094 640
- US-A1- 2009 290 757
- US-A1- 2010 177 963
- US-B1- 9 049 433
- QUINANE LUKE ET AL: "An easy way (tool?) to compare images pixel for pixel in different formats?", 20 October 2015 (2015-10-20), pages 1 - 2, XP055961434, Retrieved from the Internet <URL:https://web.archive.org/web/20151020023525/https://stackoverflow.com/questions/691799/an-easy-way-tool-to-compare-images-pixel-for-pixel-in-different-formats> [retrieved on 20220915]
- M. A. MCHUTCHON ET AL: "Signal Processing for Remote Condition Monitoring of Railway Points", STRAIN., vol. 41, no. 2, 1 May 2005 (2005-05-01), US, pages 71 - 85, XP055324363, ISSN: 0039-2103, DOI: 10.1111/j.1475-1305.2005.00202.x

## Beschreibung

Eine automatische Überprüfung von Bilddaten ist beispielsweise in der US 2009/290757 A1 (MIAN ZAHID F [US] ET AL) 26. November 2009 (2009-11-26), in der EP 1 395 059 A2 (FUJI HEAVY IND LTD [JP]) 3. März 2004 (2004-03-03), in der JP 2004 094640 A (FUJI HEAVY IND LTD) 25. März 2004 (2004-03-25), in der WO 2012/016374 A1 (EMPIRE TECHNOLOGY DEV LLC [US]; WANG ZHANJIE [CN]) 9. Februar 2012 (2012-02-09), in der US 2010/177963 A1 (YOKOMITSU SUMIO [JP] ET AL) 15. Juli 2010 (2010-07-15) sowie in M. A. MCHUTCHON ET AL: "Signal Processing for Remote Condition Monitoring of Railway Points", STRAIN., Bd. 41, Nr. 2, 1. Mai 2005, Seiten 71-85 beschrieben.

In vielen Bereichen der Technik, beispielsweise in der Eisenbahntechnik, müssen grafisch dargestellte Visualisierungen, sogenannte Bilddarstellungen, aus Sicherheitsgründen überprüft werden. Diese Bilddarstellung wird beispielsweise auf einem Monitor dargestellt und gibt beispielsweise den Prozesszustand oder die Prozesszustände einer technischen Anlage, insbesondere einer eisenbahntechnischen Anlage, wieder. Auf dem Bedienplatz eines Stellwerks der eisenbahntechnischen Anlage müssen aus Sicherheitsgründen Bilddarstellungen, die von einer Grafikkarte ausgegeben werden und die sicherheitsrelevanten Teile betreffen, auf Korrektheit überprüft werden. Es muss sichergestellt werden, dass auch tatsächlich das angezeigt wird, was angezeigt werden soll und Verfälschungen der Darstellung offenbart werden. Die Stellung einer Weiche muss beispielsweise so dargestellt werden, wie sie wirklich ist. Diese Überprüfung kann beispielsweise durch eine redundante Bilddarstellung auf zwei unabhängigen Systemen erfolgen. Dafür wird die Bilddarstellung von den zwei unabhängigen Systemen zeitgleich aufbereitet und visualisiert. Dabei wird von beiden Systemen die dargestellte Bilddarstellung aus einem Grafikkartenspeicher ausgelesen. Von beiden Bilddarstellungen wird dann beispielsweise jeweils die Prüfsumme berechnet, die miteinander verglichen werden können. Bei ungleichen Prüfsummen wird die Bilddarstellung als verfälscht und damit als nicht verlässlich eingestuft. Der Aufwand für die redundante Bilddarstellung ist allerdings relativ hoch. Weiterhin reagiert diese Überprüfung sehr empfindlich auf jede Art von Abweichung, weil bereits eine Abweichung eines einzelnen Bildpixels an beliebiger Position, die eigentlich unproblematisch wäre, zu einer Fehlermeldung führen kann.

Es ist daher die Aufgabe der vorliegenden Erfindung, ein Verfahren und eine Vorrichtung bereitzustellen, mit denen eine Bilddarstellung auf einfache Weise und möglichst unempfindlich gegenüber nicht signifikanten Abweichungen überprüft werden kann.

Diese Aufgabe wird gelöst von einem Verfahren nach Anspruch 1 zum Verarbeiten einer wenigstens eine Information darstellenden Bilddarstellung, bei dem eine Übereinstimmung von wenigstens einem Teil der Bilddarstellung mit wenigstens einem Teil eines bekannten Vergleichsmusters ermittelt wird und bei dem eine dem Vergleichsmuster zugewiesene Information als die wenigstens eine von der Bilddarstellung dargestellte Information ermittelt wird.

Ferner wird diese Aufgabe gelöst durch eine Vorrichtung nach Anspruch 12 zum Verarbeiten einer wenigstens eine Information darstellenden Bilddarstellung, mit wenigstens einer Speichereinrichtung, die zum Speichern von wenigstens einem bekannten Vergleichsmuster und wenigstens einer dem Vergleichsmuster zugewiesenen Information ausgebildet ist, und mit wenigstens einer Auswerteeinrichtung, die zum Ermitteln einer Übereinstimmung von wenigstens einem Teil der Bilddarstellung mit wenigstens einem Teil des wenigstens einen in der Speichereinrichtung gespeicherten Vergleichsmusters ausgebildet ist und die zum Ermitteln der dem Vergleichsmuster zugeordnetem und in der Speichereinrichtung gespeicherten Information als die wenigstens eine von der Bilddarstellung dargestellte Information ausgebildet ist.

Die erfindungsgemäße Lösung hat den Vorteil, dass durch die festgestellte Übereinstimmung mit dem bekannten Vergleichsmuster die von der Bilddarstellung dargestellte Information einfach ermittelt werden kann. So kann die dargestellte Information überprüft werden, ohne dass eine Überprüfung aller Pixel der Bilddarstellung stattfinden muss. So ist die Überprüfung einer Bilddarstellung möglich und kleinere Abweichungen können toleriert werden, solange eine eindeutige und zweifelsfreie Identifikation des jeweiligen Vergleichsmusters und die Zuordnung der korrespondierenden Information, die beispielsweise ein bestimmter Prozesszustand der eisenbahntechnischen Anlage ist, möglich ist. Damit wird die eigentliche Auswertung von der störanfälligen pixelweisen Auswertung der Bilddarstellung zu der weniger anfälligen Bestimmung der dargestellten Information verschoben. Diese Änderung des Auswerteprozesses erhöht die Störungssicherheit und vereinfacht die Automatisierung.

Bei dem erfindungsgemäßen Verfahren wird die als von der Bilddarstellung dargestellt ermittelte Information mit einer als wahr bekannten von der Bilddarstellung darzustellenden Information verglichen. Diese wahre Information, beispielsweise die Stellung einer Weiche oder eines Signals einer eisenbahntechnischen Anlage, wird stellwerksseitig bereitgestellt. Dies hat den Vorteil, dass unabhängig von der pixelgenauen grafischen Darstellung der Bilddarstellung die dargestellte Information gegenüber der darzustellenden Information geprüft wird. So werden Störungen durch unbedeutende Pixelfehler ausgeschlossen.

Die erfindungsgemäße Lösung kann durch vorteilhafte Ausgestaltungen weiterentwickelt werden, die im Folgenden beschrieben sind.

Um eine einfache Überprüfung durchzuführen, können beim Ermitteln der Übereinstimmung die Bilddarstellung und das Vergleichsmuster durch Korrelation im Wesentlichen pixelweise verglichen werden. Dies ist ein einfaches und bewährtes Verfahren, um eine Übereinstimmung abschätzen zu können. Damit eine Störanfälligkeit vermieden wird, kann beim Ermitteln der Übereinstimmung eine Abweichung zwischen Bilddarstellung und Vergleichsmuster in einem vorbestimmten Umfang zugelassen werden. So kann beispielsweise ausgeschlossen werden, dass durch kleine Pixelfehler in der Darstellung, die keine sicherheitstechnischen Auswirkungen haben, eine Fehlerreaktion ausgelöst wird, die zu unnötigen aufwendigen Maßnahmen führt.

In einer vorteilhaften Ausgestaltung kann das wenigstens eine Vergleichsmuster eingelernt werden. Dies hat den Vorteil, dass neu darzustellende Informationen, beispielsweise neue Signale, leicht in ein bestehendes System eingearbeitet werden können und dadurch das erfindungsgemäße Verfahren besonders flexibel ist. Auch das erste Einlernen von den Vergleichsmustern kann schnell erledigt werden.

Um die erfindungsgemäße Lösung besonders gut nutzen zu können, umfasst die Information erfindungsgemäß jeweils wenigstens einen Prozesszustand einer eisenbahntechnischen Anlage.

Ferner kann beim Ermitteln der Übereinstimmung eine Form und/oder eine Farbe der Bilddarstellung erfasst und mit einer bekannten Form und/oder Farbe des Vergleichsmusters verglichen werden. Dies hat den Vorteil, dass die Farbe und die Form unabhängig voneinander mit beispielsweise unterschiedlichen Prüfkriterien verglichen werden können. Weiterhin kann die Form und/oder Farbe jeweils in separaten Bereichen erkannt und verglichen werden, insbesondere in einem Vordergrund und/oder einem Hintergrund. Es können Bereiche des Vergleichsmusters vom Vergleich ausgeschlossen werden. Beispielsweise wird für jedes Vergleichsmuster zunächst in einem ersten Prüfschritt die Form überprüft. Dabei werden die Formen der Vergleichsmuster in beispielsweise drei Anteilen betrachtet: Zunächst Pixel, die als Vordergrund des Vergleichsmusters betrachtet werden und die mit dem Vordergrund der Bilddarstellung übereinstimmen müssen. Anschließend werden Pixel, die als Hintergrund des Vergleichsmusters betrachtet werden, geprüft. Diese müssen mit dem Hintergrund der Bilddarstellung übereinstimmen. Schließlich können Pixel geprüft werden, die in dem Bereich liegen, der vom Vergleich ausgeschlossen wurde und weder als Vordergrund noch als Hintergrund zu betrachten ist. Diese müssen für das betrachtete Vergleichsmuster nicht mit der Bilddarstellung übereinstimmen. Beispielsweise kann ein anderes Element in diesen Bereich hineinragen, das in einem separaten Prüfzyklus mit einem anderen Vergleichsmuster verglichen wird. Nachdem beispielsweise die Form eines Vergleichsmusters erkannt wurde, werden Vordergrundfarben und Hintergrundfarben ermittelt und geprüft.

In einer anderen vorteilhaften Ausgestaltung der Erfindung kann beim Ermitteln der Übereinstimmung die Bilddarstellung oder ein Teil der Bilddarstellung mit mehreren bekannten Vergleichsmustern verglichen werden. So wird die Bilddarstellung mit einer Vielzahl von Vergleichsmustern verglichen, die jeweils einer bestimmten Information zugeordnet sind. Hierdurch wird die von der Bilddarstellung dargestellte Information ermittelt, die dann anschließend auf ihre Richtigkeit überprüft werden kann. Alternativ hierzu wäre eine Vorgehensweise möglich, bei der zunächst anhand der wahren Information, beispielsweise des wahren Prozesszustands, das dieser wahren Information entsprechende Vergleichsmuster herausgesucht wird. Anschließend wird überprüft, ob dieses "Soll-Vergleichsmuster" mit der Bilddarstellung übereinstimmt.

Wenn mit mehreren Vergleichsmustern verglichen wird, können mehrere Gruppen von Vergleichsmustern mit wenigstens einem gemeinsamen Merkmal gebildet werden und beim Ermitteln der Übereinstimmung zunächst eine Zugehörigkeit zu einer Gruppe der Vergleichsmuster ermittelt werden. Dies hat den Vorteil, dass durch die Gruppenbildung ein übereinstimmendes Vergleichsmuster in weniger Prüfschritten schneller gefunden werden kann und dadurch die nötige Bearbeitungszeit verringert wird.

Um die Vergleichsmuster besonders einfach verarbeiten zu können, kann dem wenigstens einen Vergleichsmuster die Information in Textform zugeordnet sein, insbesondere in einer vordefinierten Meta-Sprache. Eine in Textform vorliegende Information kann auf einfache Weise weiterbearbeitet werden und ist dadurch vorteilhaft. Unter Meta-Sprache ist hier eine Sprache zu verstehen, die beispielsweise über zugehörige Objekte spricht. Beispielsweise wäre dies in einer eisenbahntechnischen Anlage der Text "Weiche Nr. 15 in Position 1". Ferner kann die als von der Bilddarstellung dargestellt ermittelte Information normiert werden, insbesondere durch eine Prüfsummenberechnung. Eine Normierung ist hilfreich, um beispielsweise die Textform weiter zu vereinfachen und dadurch möglichst wenig Daten übermitteln und verarbeiten zu müssen.

Um die Bilddarstellung möglichst einfach erfassen zu können, kann diese digital, insbesondere aus einem Speicher einer Grafikkarte, ausgelesen werden.

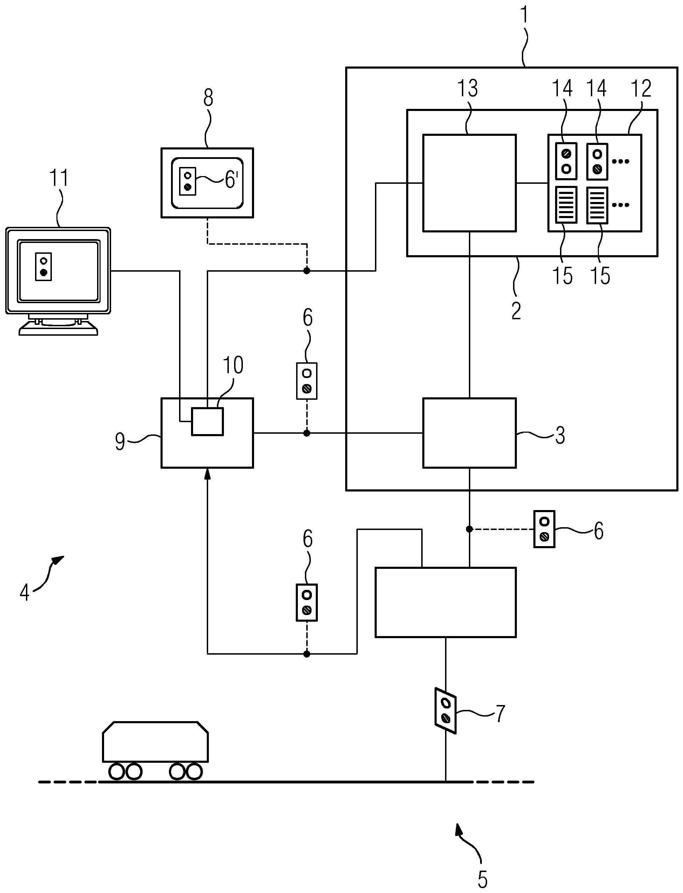

Schließlich betrifft die Erfindung auch eine Prüfvorrichtung für eine Bilddarstellung einer eisenbahntechnischen Anlage, mit der erfindungsgemäßen Vorrichtung zum Verarbeiten einer wenigstens eine Information darstellenden Bilddarstellung, und mit einer Vergleichseinrichtung, die zum Vergleichen der von der Auswerteeinrichtung ermittelten Information mit einer als wahr bekannten von der Bilddarstellung darzustellenden Information ausgebildet ist. Die erfindungsgemäße Prüfvorrichtung wird in Verbindung mit einem Stellwerk einer eisenbahntechnischen Anlage eingesetzt, um sicherheitsrelevante Bilddarstellungen zu überprüfen. Im Folgenden wird die Erfindung mit Bezug auf die beispielshafte Ausführungsform in der beigefügten Zeichnung erläutert. Die einzige Figur zeigt eine schematische Darstellung einer beispielhaften Ausführungsform einer erfindungsgemäßen Prüfvorrichtung.

Die beispielhafte Ausführungsform der erfindungsgemäßen Prüfvorrichtung 1 umfasst eine Verarbeitungsvorrichtung 2 und eine Vergleichseinrichtung 3. In der dargestellten Ausführungsform ist die Prüfvorrichtung 1 in Verbindung mit einem Stellwerk 4 einer eisenbahntechnischen Anlage 5 angeordnet.

Die eisenbahntechnische Anlage 5 wird durch das Stellwerk 4 kontrolliert und gesteuert. Dafür werden verschiedenste Prozesszustände, wie beispielsweise der Prozesszustand 6 eines Signals 7, in dem Stellwerk 4 dargestellt. Dieser Prozesszustand 6 wird in einer Bilddarstellung 8 beispielsweise auf einem Monitor dargestellt. Die Bilddarstellung 8 ist dabei eine grafisch dargestellte dynamische Visualisierung des Prozesszustands 6 der eisenbahntechnischen Anlage 5. Der Prozesszustand 6 stellt somit eine von der Bilddarstellung 8 dargestellte Information dar. Selbstverständlich kann die Bilddarstellung 8 eine Vielzahl von Prozesszuständen 6 darstellen, auch wenn in der Figur der Einfachheit halber nur ein Prozesszustand 6 dargestellt ist.

Die Bilddarstellung 8 wird auf Basis der Informationen vom Stellwerk 4 in einer Bearbeitungseinrichtung 9 erzeugt und beispielsweise in einem Grafikkartenspeicher 10 abgelegt. Aus dem Grafikkartenspeicher 10 greift das Anzeigemittel 11, beispielsweise ein Monitor, die Bilddarstellung 8 ab und stellt diese grafisch dar. Die Bediener steuern die eisenbahntechnische Anlage 5 aufgrund der Informationen, die mittels der Bilddarstellung 8 auf dem Anzeigemittel 11 dargestellt werden. Die dargestellte Information ist im beispielhaft dargestellten Fall der eisenbahntechnischen Anlage 5 der Prozesszustand 6. In anderen Anlagen könnten andere Informationen für einen Bediener dargestellt werden. Die Richtigkeit der dargestellten Informationen, also in diesem Fall des Prozesszustands 6, ist für den Betrieb der eisenbahntechnischen Anlage 5 und der mit ihr beförderten Fahrgäste von höchster Wichtigkeit. Daher wird die Korrektheit der vom Anzeigemittel 11 ausgegebenen Information durch die erfindungsgemäße Prüfvorrichtung 1 überprüft, so dass Verfälschungen der Bilddarstellung offenbart werden.

Die Verarbeitungsvorrichtung 2 der Prüfvorrichtung 1 umfasst eine Speichereinrichtung 12 und eine Auswerteeinrichtung 13. Die in der Bearbeitungseinrichtung 9 erzeugte Bilddarstellung 8 wird von der Prüfvorrichtung 1 in digitaler Form aus dem Grafikkartenspeicher 10 abgegriffen. Die Auswerteeinrichtung 13 vergleicht die Bilddarstellung 8 oder wenigstens einen Teil der Bilddarstellung 8 mit Vergleichsmustern 14, die in der Speichereinrichtung 12 abgelegt sind. Die Vergleichsmuster 14 sind im Vorfeld festgelegt und eingelernt oder projektiert worden. Die Vergleichsmuster 14 repräsentieren alle gültigen Darstellungen der verschiedenen Prozesszustände 6 der eisenbahntechnischen Anlage 5. Beispielsweise kann das in der Figur beispielhaft dargestellte Signal 7 den dargestellten Prozesszustand Signalstellung-"freie Fahrt" oder den Prozesszustand Signalstellung-"stop" einnehmen. Daher weist die Speichereinrichtung 12 sowohl ein Vergleichsmuster 14 für den Prozesszustand Signalstellung-"freie Fahrt" auf als auch ein Vergleichsmuster für den Prozesszustand Signalstellung-"stop". Jedem Vergleichsmuster 14 ist in der Speichereinrichtung 12 ein Text 15 in einer Meta-Sprache zugeordnet, der den korrespondierenden Prozesszustand wiedergibt. In der beispielhaften Ausführungsform in der Figur ist dies beispielsweise der Text "stop" und "freie Fahrt".

Die Auswerteeinrichtung 13 vergleicht einen Teil der Bilddarstellung 8 mit den Vergleichsmustern 14 und ermittelt eine Übereinstimmung der Bilddarstellung 8 mit einem der Vergleichsmuster 14. Somit hat die Auswerteeinrichtung 13 und die Verarbeitungsvorrichtung 2 ermittelt, dass die Bilddarstellung 8 einen Prozesszustand darstellt, der einem der in der Speichereinrichtung 12 abgelegten Vergleichsmustern 14 zugeordnet ist. Anschließend wird der Text 15, der dem ermittelten Vergleichsmuster 14 zugeordnet ist, als Zwischenergebnis abgespeichert. Um eine Verdichtung der Daten durchzuführen, wird von dem Text 15 eine Prüfsumme gebildet und diese an die Vergleichseinrichtung 3 übermittelt.

Die Vergleichseinrichtung 3 überprüft, ob der in der Bilddarstellung angezeigte und ermittelte Prozesszustand 6 dem wahren Prozesszustand 6 der eisenbahntechnischen Anlage 5 entspricht. Dazu wird der wahre Prozesszustand 6 stellwerksseitig an die Vergleichseinrichtung 3 übermittelt. Dabei wird der Prozesszustand 6 ebenfalls in Textform in eine Meta-Sprache übersetzt und zur Datenverdichtung die Prüfsumme gebildet. Dies kann beispielsweise in der Vergleichseinrichtung 3 geschehen. In jedem Fall kann die Vergleichseinrichtung 3 so die beiden Prüfsummen miteinander vergleichen und feststellen, ob der von der Bilddarstellung 8 dargestellte Prozesszustand 6' dem wahren Prozesszustand 6 entspricht. Der wahre Prozesszustand 6 wird an die Vergleichseinrichtung 3 beispielsweise in Form eines Telegramms übermittelt.

Beim Vergleich der Bilddarstellung 8 mit den Vergleichsmustern 14 werden alle Vergleichsmuster 14 pixelweise mit der Bilddarstellung 8 verglichen. Um die Anzahl der Vergleiche zu minimieren, können die Vergleichsmuster 14 gruppiert werden. Die in der Figur beispielhaft dargestellten Vergleichsmuster 14 sind beispielsweise Teil einer Gruppe von Vergleichsmustern 14, die alle Signale betreffen. Weitere Gruppen von Vergleichsmustern können beispielsweise Weichen oder Gleise betreffen. Durch die Gruppierung der Vergleichsmuster 14 kann der Vergleichsprozess der Bilddarstellung 8 mit den Vergleichsmustern 14 beschleunigt werden, weil nicht sämtliche Vergleichsmuster 14 geprüft werden müssen. Sobald der Typ der entsprechenden Vergleichsmustergruppe erkannt worden ist, muss nur noch innerhalb dieser Gruppe von Vergleichsmustern 14 geprüft werden.

Die Vergleichsmuster 14 werden bei der beispielhaften Ausführungsform der Figur einerseits über die Form und andererseits über die verwendete Vordergrundfarbe und Hintergrundfarbe definiert und verglichen. Hierbei wird für jedes Vergleichsmuster 14 zunächst die Form überprüft. Dabei bestehen die Formen der Vergleichsmuster aus beispielsweise drei Anteilen. Zunächst aus Pixeln, die als Vordergrund des dargestellten Zeichens in der Bilddarstellung 8 betrachtet werden. Diese Pixel müssen mit dem Vordergrund der Bilddarstellung übereinstimmen. Außerdem solche Pixel, die als Hintergrund des Vergleichsmusters 14 betrachtet werden. Diese Pixel müssen mit dem Hintergrund der Bilddarstellung 8 übereinstimmen. Schließlich gibt es Pixel, die in einem Bereich liegen, der vom Vergleich ausgeschlossen wurde und weder als Vordergrund noch als Hintergrund zu bewerten sind. Diese müssen für das betrachtete Vergleichsmuster 14 nicht mit der Bilddarstellung 8 übereinstimmen. Hier kann beispielsweise ein anderes Element in den betrachteten Bereich der Bilddarstellung hineinragen, das in einem weiteren Prüfzyklus betrachtet wird. Nachdem die Form des Vergleichsmusters 14 erkannt worden ist, werden die Vordergrundfarben und Hintergrundfarben ermittelt und abgespeichert.

Bei der in der Figur beispielhaft dargestellten Ausführungsform werden begrenzte und relativ kleine Bereiche oder Teile der Bilddarstellung 8 schrittweise geprüft und mit den Vergleichsmustern 14 verglichen. Beispielsweise wird ein Bereich von ca. 20 x 20 Pixeln in einem Schritt geprüft. Diese Größe repräsentiert beispielsweise die typischen Ausleuchtinformationen eines einzelnen Elements oder von Teilen eines Elements, die einem dargestellten Prozesszustand entsprechen. Einzelne Pixelabweichungen zwischen der Bilddarstellung 8 und den Vergleichsmustern 14 können toleriert werden, solange eine eindeutige und zweifelsfreie Identifikation des jeweiligen Vergleichsmusters 14 in der Bilddarstellung 8 möglich ist. Da durch das erfindungsgemäße Verfahren üblicherweise kleine Bereiche der Bilddarstellung 8 Schritt für Schritt geprüft werden, wird eine unzulässige Aufsummierung von Abweichungen auf der gesamten Bilddarstellung 8 ausgeschlossen, da für jeden Teilbereich der Bilddarstellung 8 ein Vergleichsmuster 14 identifiziert wird. Nach und nach wird durch die Prüfung der Teilbereiche die gesamte Bilddarstellung 8 geprüft.

Kleine Abweichungen in den Teilbereichen sind tolerierbar, weil sie zu keinem erheblichen Gesamtfehler führen. Beispielsweise wäre in einem Teilbereich von 20 x 20 Pixeln eine Abweichung von 1 % maximal 4 Pixel. Diese Abweichung von 4 Pixeln ist tolerierbar, da sie durch einen Betrachter nicht wahrnehmbar ist und somit keine Fehlinformation über den Prozesszustand der eisenbahntechnischen Anlage 5 hervorruft. Im Gegensatz hierzu würde bei einem Vergleich eines kompletten Bildschirms von beispielsweise 1280 x 1024 Pixeln wie im Stand der Technik selbst eine prozentuale Abweichung von nur 0,1 % mehr als 1000 Pixel aufweisen. Wenn diese 1000 Pixel auf einem kleinen Bereich konzentriert sind, würde eine nicht tolerierbare Störung im Bild vorliegen, die ein erhebliches Sicherheitsrisiko darstellen würde. Dementsprechend müssen im Stand der Technik auch kleinste Abweichungen offenbart werden. Bei dem erfindungsgemäßen Verfahren können hingegen Abweichungen bis zu einem bestimmten Prozentsatz toleriert werden.

## Patentansprüche

1. Verfahren zum Verarbeiten einer wenigstens eine Information auf wenigstens einem Anzeigemittel (11) darstellenden Bilddarstellung (8) und Überprüfen einer Korrektheit dieser vom Anzeigemittel (11) ausgegebenen Information,
so dass Verfälschungen der Bilddarstellung (8) offenbart werden,
bei dem eine Übereinstimmung von wenigstens einem Teil der Bilddarstellung (8) mit wenigstens einem Teil eines bekannten Vergleichsmusters (14) ermittelt wird,
wobei die Bilddarstellung (8) auf Informationen von einem Stellwerk (4) einer eisenbahntechnischen Anlage (5) basiert, und
bei dem durch die festgestellte Übereinstimmung eine dem Vergleichsmuster (14) zugewiesene Information als die wenigstens eine von der Bilddarstellung dargestellte Information ermittelt wird,
bei dem die als von der Bilddarstellung (8) dargestellte ermittelte Information mit einer als wahr bekannten von der Bilddarstellung (8) darzustellenden Information, die stellwerksseitig bereitgestellt wird, verglichen wird und
die Information jeweils wenigstens einen Prozesszustand (6) der eisenbahntechnischen Anlage umfasst.

2. Verfahren nach einem der oben genannten Ansprüche,
**dadurch gekennzeichnet, dass**
beim Ermitteln der Übereinstimmung die Bilddarstellung (8) und das Vergleichsmuster (14) pixelweise verglichen werden.

3. Verfahren nach einem der oben genannten Ansprüche,
**dadurch gekennzeichnet, dass**
beim Ermitteln der Übereinstimmung eine Abweichung zwischen Bilddarstellung (8) und Vergleichsmuster (14) in einem vorbestimmten Umfang zugelassen wird.

4. Verfahren nach einem der oben genannten Ansprüche,
**dadurch gekennzeichnet, dass** das wenigstens eine Vergleichsmuster (14) eingelernt wird.

5. Verfahren nach einem der oben genannten Ansprüche,
**dadurch gekennzeichnet, dass**
beim Ermitteln der Übereinstimmung eine Form und/oder eine Farbe der Bilddarstellung (8) erfasst und mit einer bekannten Form und/oder Farbe des Vergleichsmusters (14) verglichen wird.

6. Verfahren nach Anspruch 5,
**dadurch gekennzeichnet, dass**
sowohl die Form als auch die Farbe jeweils in separaten Bereichen erkannt und verglichen werden, insbesondere in einem Vordergrund und/oder einem Hintergrund.

7. Verfahren nach einem der oben genannten Ansprüche,
**dadurch gekennzeichnet, dass**
beim Ermitteln der Übereinstimmung die Bilddarstellung (8) oder ein Teil der Bilddarstellung mit mehreren bekannten Vergleichsmustern (14) verglichen wird.

8. Verfahren nach Anspruch 7,
**dadurch gekennzeichnet, dass**
mehrere Gruppen von Vergleichsmustern (14) mit wenigstens einem gemeinsamen Merkmal gebildet werden und beim Ermitteln der Übereinstimmung zunächst eine Zugehörigkeit zu einer Gruppe der Vergleichsmuster (14) ermittelt wird.

9. Verfahren nach einem der oben genannten Ansprüche,
**dadurch gekennzeichnet, dass**
dem wenigstens einen Vergleichsmuster (14) die Information in Textform zugeordnet ist.

10. Verfahren nach einem der oben genannten Ansprüche,
**dadurch gekennzeichnet, dass** die als von der Bilddarstellung (8) dargestellt ermittelte Information normiert wird, insbesondere durch eine Prüfsummenberechnung.

11. Verfahren nach einem der oben genannten Ansprüche,
**dadurch gekennzeichnet, dass** die Bilddarstellung (8) digital, insbesondere aus einem Speicher einer Grafikkarte, ausgelesen wird.

12. Prüfvorrichtung (1) für eine wenigstens eine Information auf wenigstens einem Anzeigemittel (11) darstellende Bilddarstellung (8) und zum Überprüfen einer Korrektheit dieser vom Anzeigemittel (11) ausgegebenen Information,
so dass Verfälschungen der Bilddarstellung (8) offenbart werden,
mit einer Verarbeitungsvorrichtung (2) zum Verarbeiten einer wenigstens eine Information darstellenden Bilddarstellung (8), wobei die Verarbeitungsvorrichtung (2) folgendes umfasst:
wenigstens eine Speichereinrichtung (12), die zum Speichern von wenigstens einem bekannten Vergleichsmuster (14) und wenigstens einer dem Vergleichsmuster (14) zugewiesenen Information ausgebildet ist,
wobei die Bilddarstellung (8) auf Informationen von einem Stellwerk (4) der eisenbahntechnischen Anlage (5) basiert, und
wenigstens eine Auswerteeinrichtung (13), die zum Ermitteln einer Übereinstimmung von wenigstens einem Teil der Bilddarstellung (8) mit wenigstens einem Teil des wenigstens einen in der Speichereinrichtung (12) gespeicherten Vergleichsmusters (14) ausgebildet ist und die durch die festgestellte Übereinstimmung zum Ermitteln der dem Vergleichsmuster (14) zugeordneten und in der Speichereinrichtung (12) gespeicherten Information als die wenigstens eine von der Bilddarstellung (8) dargestellte Information ausgebildet ist,
und
mit einer Vergleichseinrichtung (3), die zum Vergleichen der von der Auswerteeinrichtung (13) ermittelten Information mit einer als wahr bekannten von der Bilddarstellung (8) darzustellenden Information, die stellwerksseitig bereitgestellt wird, ausgebildet ist,
wobei die Information jeweils wenigstens einen Prozesszustand (6) einer eisenbahntechnischen Anlage umfasst.

## Claims

1. Method for processing an image representation (8) representing at least one item of information on at least one display means (11) and checking a correctness of this item of information output by the display means (11),
so that falsifications of the image representation (8) are disclosed,
in which a correspondence between at least one part of the image representation (8) and at least one part of a known comparison pattern (14) is determined,
wherein the image representation (8) is based on information from an interlocking (4) of a railway installation (5)
and
in which an item of information allocated to the comparison pattern (14) is determined by the established correspondence as the at least one item of information represented by the image representation,
in which
the information determined as represented by the image representation (8) is compared with an item of information, which is provided on the interlocking side, to be represented by the image representation (8) and known as true, and
the information comprises in each case at least one process state (6) of the railway installation.

2. Method according to one of the afore-cited claims, **characterised in that**
when the correspondence is determined, the image representation (8) and the comparison pattern (14) are compared pixel by pixel.

3. Method according to one of the afore-cited claims, **characterised in that**
when the correspondence is determined, a variation between the image representation (8) and the comparison pattern (14) is permitted in a predetermined scope.

4. Method according to one of the afore-cited claims, **characterised in that**
the at least one comparison pattern (14) is taught.

5. Method according to one of the afore-cited claims, **characterised in that**
when the correspondence is determined, a shape and/or a colour of the image representation (8) is detected and compared with a known shape and/or colour of the comparison pattern (14).

6. Method according to claim 5,
**characterised in that**
both the shape and also the colour are identified and compared in separate regions in each case, in particular in a foreground and/or a background.

7. Method according to one of the afore-cited claims, **characterised in that**
the image representation (8) or a part of the image representation is compared with several known comparison patterns (14) when the correspondence is determined.

8. Method according to claim 7,
**characterised in that**
several groups of comparison patterns (14) are formed with at least one shared feature and an association with a group of comparison patterns (14) is first determined when the correspondence is determined.

9. Method according to one of the afore-cited claims, **characterised in that**
the information is assigned to the at least one comparison pattern (14) in text form.

10. Method according to one of the afore-cited claims, **characterised in that**
the information determined as shown by the image representation (8) is standardized, in particular by a checksum.

11. Method according to one of the afore-cited claims, **characterised in that**
the image representation (8) is read out digitally, in particular from a storage device of a graphics card.

12. Testing device (1) for an image representation (8) representing at least one item of information on at least one display means (11) and for checking a correctness of this information output by the display means (11),
so that falsifications of the image representation (8) are disclosed,
having a processing device (2) for processing an image representation (8) representing at least one item of information, wherein the processing device (2) comprises the following:
at least one storage device (12), which is embodied to store at least one known comparison pattern (14) and at least one item of information allocated to the comparison pattern (14), wherein the image representation (8) is based on information from an interlocking (4) of the railway installation (5) and at least one evaluation facilty (13), which is embodied to determine a correspondence between at least one part of the image representation (8) and at least one part of the at least one comparison pattern (14) stored in the storage device (12) and which is embodied by the ascertained correspondence to determine the item of information assigned to the comparison pattern (14) and stored in the storage device (12) as the at least one item of information represented by the image representation (8), and
with a comparison facility (3) which is embodied to compare the information determined by the evaluation facility (13) with an item of information, which is provided on the interlocking side, to be represented by the image representation (8) and known as true,
wherein the information comprises at least one process state (6) of a railway installation.

## Revendications

1. Procédé de traitement d'une représentation (8) d'image représentant au moins une information sur au moins un moyen (11) d'affichage et de contrôle que cette information donnée par le moyen (11) d'affichage est correcte,
de manière à rendre manifeste des altérations de la représentation (8) d'image,
dans lequel on détermine une coïncidence d'au moins une partie de la représentation (8) d'image avec au moins une partie d'un modèle (14) de comparaison connue,
dans lequel la représentation (8) d'image repose sur des informations d'un poste (4) d'aiguillage d'une installation (5) de la technique des chemins de fer,
et
dans lequel par la constatation de la coïncidence, on détermine une information affectée au modèle (14) de comparaison comme étant la au moins une information représentée par la représentation d'image,
dans lequel
on compare l'information déterminée représentée par la représentation (8) d'image à une information connue comme vraie à représenter par la représentation (8) d'image, qui a été mise à disposition du côté du poste d'aiguillage et
l'information comprend respectivement au moins un état (6) de processus de l'installation de la technique des chemins de fer.

2. Procédé suivant l'une des revendications précédentes, **caractérisé en ce que**
lors de la détermination de la coïncidence, on compare pixel par pixel la représentation (8) d'image et le modèle (14) de comparaison.

3. Procédé suivant l'une des revendications précédentes, **caractérisé en ce que**
lors de la détermination de la coïncidence, on admet dans une mesure déterminée à l'avance, un écart entre la représentation (8) d'image et le modèle (14) de comparaison.

4. Procédé suivant l'une des revendications précédentes, **caractérisé en ce que** l'
on fait subir un apprentissage au au moins un modèle (14) de comparaison.

5. Procédé suivant l'une des revendications précédentes, **caractérisé en ce que**
lors de la détermination de la coïncidence, on détecte une forme et/ou une couleur de la représentation (8) d'image et on la compare à une forme et/ou une couleur connue du modèle (14) de comparaison.

6. Procédé suivant la revendication 5,
**caractérisé en ce que** l'
on détecte et on compare, tant la forme qu'également la couleur respectivement dans des parties distinctes, en particulier dans un avant-plan et/ou un arrière-plan.

7. Procédé suivant l'une des revendications précédentes, **caractérisé en ce que**
lors de la détermination de la coïncidence, on compare la représentation (8) d'image ou une partie de la représentation dite d'image à plusieurs modèles (14) de comparaison connus.

8. Procédé suivant la revendication 7,
**caractérisé en ce que** l'
on forme plusieurs groupes de modèles (14) de comparaison ayant au moins une caractéristique commune et, lorsque l'on détermine la coïncidence, on détermine d'abord une appartenance à un groupe des modèles (14) de comparaison.

9. Procédé suivant l'une des revendications précédentes **caractérisé en ce que**
l'information sous la forme d'un texte est associée au au moins un modèle (14) de comparaison.

10. Procédé suivant l'une des revendications précédentes **caractérisé en ce que** l'
on norme, en particulier par un calcul de somme de contrôle, l'information déterminée représentée par la représentation (8) d'image.

11. Procédé suivant l'une des revendications précédentes, **caractérisé en ce qu'**
on lit la représentation (8) d'image numériquement, en particulier dans une mémoire d'une carte graphique.

12. Installation (1) de contrôle d'une représentation (8) d'image représentant au moins une information sur au moins un moyen (11) d'affichage et de contrôle que cette information donnée par le moyen (11) d'affichage est correcte,
de manière à rendre manifeste des altérations de la représentation (8) d'image,
comprenant une installation (2) de traitement pour le traitement d'une représentation (8) d'image représentant au moins une information, dans laquelle l'installation (2) de traitement comprend ce qui suit :
au moins un dispositif (12) de mémoire, qui est constitué pour la mise en mémoire d'au moins un modèle (14) de comparaison connu et d'au moins une information affectée au modèle (14) de comparaison,
dans lequel la représentation (8) d'image repose sur des informations d'un poste (4) d'aiguillage de l'installation (5) de la technique des chemins de fer,
et
au moins un dispositif (13) d'évaluation, qui est constitué pour la détermination d'une coïncidence d'au moins une partie de la représentation (8) d'image avec au moins une partie du au moins un modèle (14) de comparaison mis en mémoire dans le dispositif (12) de mémoire et qui est, par la constatation de la coïncidence, constitué pour la détermination de l'information associée au modèle (14) de comparaison et mise en mémoire dans le dispositif (12) de mémoire comme étant la au moins une information représentée par la représentation (8) d'image,
et
comprenant un dispositif (3) de comparaison, qui est constitué pour la comparaison de l'information déterminée par le dispositif (13) d'évaluation à une information, connue comme vrai, à représenter par la représentation (8) d'image, qui est mise à disposition du côté du poste d'aiguillage,
dans laquelle
l'information comprend respectivement au moins un état (6) de processus d'une installation de la technique des chemins de fer.
